# EUROPÄISCHE PATENTSCHRIFT

(11) **EP 1 415 056 B1**
(45) Veröffentlichungstag und Bekanntmachung des Hinweises auf die Patenterteilung: **11.01.2006**
(21) Anmeldenummer: 02754315.6
(22) Anmeldetag: 04.07.2002
(51) Int. Cl.: E04F 15/04, E04F 15/02, F16B 5/00

(54) **Paneel sowie Befestigungssystem für Paneele**
Panel and fastening system for panels
Panneau et système de fixation pour panneaux

(30) Priorität: 10.08.2001 DE 10138285
(43) Veröffentlichungstag der Anmeldung: 06.05.2004
(73) Patentinhaber: Akzenta Paneele + Profile GmbH, 56759 Kaisersesch (DE)
(72) Erfinder: HANNIG, Hans, Jürgen, 51427 Bergisch Gladbach (DE)
(74) Vertreter: Lippert, Hans-Joachim
(86) Internationale Anmeldenummer: PCT/DE2002/002444
(87) Internationale Veröffentlichungsnummer: WO 2003/016654

(56) Entgegenhaltungen:
- WO-A-01/02669
- WO-A-01/51732
- WO-A-84/02155
- WO-A-96/27719
- WO-A-98/40583
- WO-A-99/66151
- US-A- 5 274 979

## Beschreibung

Die Erfindung betrifft ein Befestigungssystem für viereckige tafelförmige Paneele mit an den Schmalseiten der Paneele angeordneten Halteprofilen, von denen gegenüberliegend angeordnete Halteprofile derart zueinander passen, dass gleichartige Paneele miteinander verbindbar sind, wobei die Halteprofile an gegenüberliegenden Schmalseiten als erste Halteprofile und an den übrigen Schmalseiten als zweite Halteprofile ausgebildet sind, so dass an einem in erster Reihe liegenden Paneel in zweiter Reihe ein neues Paneel verriegelbar ist, indem das neue Paneel zunächst in Schrägstellung relativ zu dem liegenden Paneel an das liegende Paneel angefügt und nachfolgend in die Ebene des liegenden Paneels herabgeschwenkt wird, wobei die gegenüberliegend angeordneten zweiten Halteprofile korrespondierende Hakenelemente aufweisen, und wobei mit einem der Hakenelemente des neuen Paneels und einem Hakenelement eines bereits in zweiter Reihe liegenden Paneels durch das Herabschwenken des neuen Paneels eine Hakenverbindung herstellbar ist, wobei jeder Hakenverbindung ein zusätzliches loses Sperrelement zugeordnet ist, das im verhakten Zustand zweier Paneele ein Lösen der Hakenverbindung in einer Richtung senkrecht zu der Ebene der verlegten Paneele unterbindet, mit der Maßgabe, dass das Sperrelement in einer Sperrnut eines der Hakenelemente eines ersten Paneels angeordnet ist und die Sperrnut an einer Fläche des Hakenelements vorgesehen ist, die im verlegten Zustand der Paneele etwa senkrecht zu der Ebene ausgerichtet ist, in der die Paneele verlegt sind, insbesondere für Fußbodenpaneele.

Ein Befestigungssystem ohne zusätzliches Sperrelement ist aus der DE 199 29 896 A1 bekannt. Charakteristisch ist für ein solches Befestigungssystem, dass die verwendeten ersten und zweiten Halteprofile stark unterschiedliche Geometrien aufweisen und sich dadurch auch die Fügeweisen der verschiedenartigen Halteprofile sehr unterscheiden. Insbesondere die als Hakenelemente ausgebildeten zweiten Halteprofile, die zu einer Hakenverbindung zusammengefügt werden, bergen ein technisches Problem. Zwar sichert die bekannte Hakenverbindung Fußbodenpaneele gut gegen ebenes Auseinanderschieben rechtwinklig zu den Schmalseiten der verbundenen Paneele. Allerdings bietet sie keine befriedigende Festigkeit gegen ein Lösen der Hakenelemente in einer Richtung senkrecht zu der Verlegeebene der Paneele.

Bevorzugt angewendet wird ein derartiges Befestigungssystem für sogenannten Laminatfußboden, der einen Kern aus Holzwerkstoff, wie MDF, HDF oder Spanplattenmaterial aufweist. Die mechanischen Halteprofile sind zumeist an die Schmalseiten von Holzwerkstoffplatten angefräst.

Laminatfußboden wird überwiegend schwimmend verlegt. Zur Minderung von Trittschall wird üblicherweise eine trittschalldämmende Zwischenlage zwischen dem Verlegeuntergrund und den Laminatpaneelen angeordnet. Auch bekannt ist es, dass eine trittschalldämmende Schicht an der dem Verlegeuntergrund zugewandten Unterseite von Laminatpaneelen fest angebracht ist.

Besonders problematisch ist die Hakenverbindung des bekannten Befestigungssystem dann, wenn im Bereich einer Hakenverbindung nur dasjenige Paneel mit einer großen Last beaufschlagt ist, dessen Hakenelement unten liegt, nämlich dem Verlegeuntergrund zugewandt ist. Das mit diesem verhakte obenliegende Hakenelement des benachbarten Paneels ist nicht belastet daher wird durch die Last nur das Paneel mit dem untenliegenden Hakenelement in die zumeist weiche trittschalldämmende Zwischenlage gedrückt. Dabei löst sich das obenliegende Hakenelement des unbelasteten Paneels aus dem untenliegenden Hakenelement des benachbarten Paneels. Die Hakenverbindung ist außer Funktion und die Funktion meist nicht wieder herstellbar.

Nach dem Stand der Technik sind Hinterschneidungen in die Hakenverbindung integriert, durch die ein Lösen der Hakenverbindung senkrecht zur Verlegeebene der Paneele verhindert werden soll. Diese Hinterschneidungen haben sich jedoch als unzureichend erwiesen, dieser Art von Befestigungselementen eine ausreichende Festigkeit zu verleihen.

Aus der WO 01/51732 A1 ist ein gattungsgemäßes Befestigungssystem bekannt, das ein zusätzliches Sperrelement aufweist. Das Sperrelement muss nach erfolgter Verriegelung der Hakenelemente nachträglich an der Verbindungsstelle eingefügt werden. Dies erfordert einen zusätzlichen Arbeitsgang. Ferner bereitet die Montage des Sperrelementes dann Probleme, wenn eine Paneelreihe sehr nah vor einer Wand liegt. Für das Sperrelement ist kein ausreichender Platz vorhanden, um es an der Verbindungsstelle einzufügen.

Der Erfindung liegt die Aufgabe zugrunde, ein Sperrelement so weiterzubilden, dass es sich einfacher und auch nahe einer Gebäudewand problemlos montieren lässt.

Erfindungsgemäß wird die Aufgabe dadurch gelöst, dass beidem o.g. Befestigungsystem das Sperrelement eine federnde Rastlasche aufweist, wobei die Sperrnut des zugeordneten Hakenelements der gegenüberliegenden Schmalseite eines zweiten Paneels eine hinterschnittene Rastvertiefung bildet, in die die Rastlasche des Hakenelements des ersten Paneels während der Montage selbsttätig einrastbar ist.

Dieses neuartige Sperrelement kann Paneelen lose beigefügt sein, damit es der Verleger während der Montage selbst an der dafür vorgesehenen Stelle an dem Hakenelement anbringen kann oder es ist für den Verleger bereits vormontiert, wenn er die Paneele verlegt. Der Verleger muss daher keine losen Verbindungsteile verarbeiten. Wenn die Hakenverbindung nahezu in ihre Verriegelungsposition herabgeschwenkt ist, federt die Rastlasche selbsttätig in die Rastvertiefung des benachbarten Paneels hervor und verriegelt die Hakenverbindung in vertikaler Richtung, nämlich senkrecht zur Ebene der verlegten Paneele.

Bei dem Sperrelement kann es sich um ein sehr einfaches Bauteil handeln, für das es vielfältige konstruktive Ausgestaltungen gibt. Es kann sich um ein Sperrelement handeln, das an einem der Hakenelemente vormontiert ist, um ein loses Sperrelement, das nach dem Verhaken der Hakenelemente angebracht wird.

In einer besonders einfachen Ausführung weist jedes der Hakenelemente der gegenüberliegenden Schmalseiten eines Paneels eine Sperrnut auf, die sich in Längsrichtung der Schmalseite erstreckt. Die Sperrnuten zweier Paneele grenzen dabei im verbundenen Zustand der Hakenelemente aneinander und bilden eine gemeinsame Sperrausnehmung. Bei der Profilierung der Hakenelemente mit Fräswerkzeugen lassen sich die Sperrnuten sehr einfach mitfräsen. Hierzu müssen entsprechende Konturen an den Fräswerkzeugen vorgesehen sein.

Wenn die Sperrausnehmung einen runden oder rechteckigen Querschnitt aufweist, hat dies den Vorteil, dass als Sperrelemente besonders kostengünstiges Standardmaterial verwendet werden kann. Es kommen beliebige Werkstoffe für Sperrelemente mit rundem oder rechteckigem Querschnitt in Frage. Entsprechendes Stangenmaterial kann beispielsweise fertig konfektioniert bezogen oder als Meterware in Sperrelemente entsprechender Länge aufgetrennt werden. Für Sperrnuten, die gemeinsam eine Sperrausnehmung mit rundem Querschnitt bilden, ist es besonders günstig, wenn als Sperrelement ein Nagel verwendet wird, oder das Sperrelement nach Art eines Nagels ausgebildet ist. Der Kopf eines Nagels vereinfacht sowohl während der Verlegung das Einfügen des Sperrelements in die Hakenverbindung als auch das Entfernen des Sperrelements, wenn die Hakenverbindung zwecks Demontage der Paneele nochmals gelöst werden muss.

Es ist sehr nützlich, wenn das Sperrelement im verhakten Zustand zweier Paneele einfach in die Sperrausnehmung einfügbar ist und der Querschnitt zumindest teilweise in den Querschnitt der Sperrnut des einen Paneels und teilweise in den Querschnitt der Sperrnut des anderen Paneels ragt. Die Querschnittsaufteilung zwischen den Sperrnuten ist nahezu beliebig. Sie kann beispielsweise davon abhängig gemacht werden, ob eines der Hakenelemente, in dem sich die Sperrnut befindet, stabiler ausgebildet ist als das andere. Das Einfügen des Sperrelements in die Sperrausnehmung kann durch Einschieben oder Einschlagen erfolgen. Es ist möglich, die Toleranzen des Sperrelements und der Sperrausnehmung so auszulegen, dass das Sperrelement sich leicht oder straff in die Sperrausnehmung einfügen lässt.

Diese Konstruktion kann einfacherweise mit einem Sperrelement versehen sein, das eine im entspannten Zustand von der Schmalseite weit hervorstehende Rastlasche aufweist, die während des Herabschwenkens eines neuen Paneels in die Ebene der verlegten Paneele mit dem Hakenelement des benachbarten Paneels in Berührung kommt und automatisch soweit zurückgeklappt wird, dass die Rastlasche an der Schmalseite nicht mehr über das äußere Ende des Hakenelements hinausragt. Wenn die Hakenverbindung nahezu ihre Verriegelungsposition erreicht hat, federt die Rastlasche selbsttätig in die Rastvertiefung des Hakenelements des benachbarten Paneels hervor und verriegelt die Hakenverbindung in vertikaler Richtung, nämlich senkrecht zur Ebene der verlegten Paneele.

Ein derartig selbsttätiges Rastelement kann in einem der Hakenelemente vormontiert sein oder lose beiliegen, damit es der Verleger selbst während der Verlegung der Paneele an dem dafür vorgesehenen Hakenelement anbringen kann.

Das selbsttätige Sperrelement sowie die Rastvertiefung sind zweckmäßigerweise so ausgebildet, dass das Sperrelement jederzeit mit einem einfachen Werkzeug, beispielsweise einer spitzen Zange leicht in Längsrichtung der Schmalseiten aus der Hakenverbindung herausgezogen werden kann, wenn die Paneele demontiert werden müssen. Dazu ist zu beiden Seiten der Rastlasche ein freier Zwischenraum vorgesehen, damit eine Zange angesetzt werden kann.

Der prinzipielle Vorteil der Verriegelung mittels eines einrastenden Sperrelements gegenüber einem einzuschiebenden Sperrelement ist, dass vor der Schmalseite einer Paneelreihe kein Raum benötigt wird, um das Sperrelement an eine Sperrausnehmung anzusetzen und in diese einzuschieben. Ein einzuschiebendes Sperrelement lässt sich nahe einer Wand nicht mehr in eine Sperrausnehmung einfügen, wohingegen das einrastbare Sperrelement problemlos seitlich an eines der Hakenelemente angefügt und durch Herabschwenken eines neuen Paneels verriegelt werden kann.

Mit einer weiteren nützlichen Verbesserung ist bezweckt, dass in ein und derselben Sperrausnehmung, die durch Sperrnuten zweier Hakenelemente gebildet ist, unterschiedliche Sperrelemente verwendet werden können, die unterschiedliche Geometrien aufweisen und durch unterschiedliche Mechanismen der Verriegelung der Hakenverbindung die erforderliche Festigkeit verleihen. Zu diesem Zweck sind die Sperrnuten und Sperrelemente besonders aufeinander abgestimmt. Dabei ist entweder ein stabförmiges Sperrelement in seiner Längsrichtung in die Sperrausnehmung einschiebbar oder alternativ ein Sperrelement in derselben Sperrausnehmung aufnehmbar, das eine federnde Rastlasche aufweist, wobei dann eine der Sperrnuten eine Halteaufnahme für das mit der Rastlasche versehene Sperrelement bildet und die zugeordnete Sperrnut eine hinterschnittene Rastvertiefung bildet, in die die federnde Rastlasche während der Montage der Hakenverbindung selbsttätig einrastbar ist.

Bevorzugt dann, wenn es sich um ein einfaches Sperrelement mit rundem oder mehreckigem Querschnitt handelt, ist es vorteilhaft, wenn die Sperrnuten an solchen Flächen eines Hakenelements vorgesehen sind, die im verlegten Zustand der Paneele etwa senkrecht zu der Ebene ausgerichtet sind, in der die Paneele verlegt sind.

Ein Paneel mit einem erfindungsgemäßen Befestigungssystem weist zwei unterschiedliche Arten miteinander zusammenwirkender Halteprofile auf. Diejenigen Halteprofile, über die die einzelnen Verlegereihen eines Fußbodens miteinander verriegelt sind, weisen Halteprofile auf, die nach dem Prinzip: Schräges Ansetzen eines neuen Paneels und anschließendes Herabschwenken desselben verriegelt werden. Die hierfür benötigte Art Halteprofil ermöglicht es, ein neues Paneel durch eine scharnierartige Schwenkbewegung an einer verlegten Paneelreihe mechanisch zu verriegeln. Die einzelnen Paneelreihen sind dadurch gegen ebenes Auseinanderziehen in einer Richtung senkrecht zu den verriegelten Halteprofilen gesichert.

An den übrigen beiden Schmalseiten eines Paneels sind Halteprofile in Form von Hakenelementen angebracht, wobei ein erstes Hakenelement von der Schmalseite hervorsteht und im verlegten Zustand dem Verlegeuntergrund zugewandt ist und das zweite Hakenelement von der Schmalseite hervorsteht und der dekorativen Oberseite des Paneels zugewandt ist. Beide Hakenelemente einer Hakenverbindung sind durch ein zusätzliches Sperrelement gegen ein Auseinanderbewegen senkrecht zur Ebene der verlegten Paneele gesichert.

Nachstehend ist die Erfindung in einer Zeichnung beispielhaft dargestellt und anhand der Figuren detailliert beschrieben. Es zeigen:
- Fig. 1: eine perspektivische Darstellung eines Halteprofils, das durch schräges Ansetzen eines neuen Paneels und anschließendes Herabsenken in die Verlegeebene mechanisch zu verriegeln ist,
- Fig. 2: das schräge Ansetzen der Halteprofile gemäß Figur 1,
- Fig. 3: die Halteprofile gemäß Figur 1 im verriegelten Zustand,
- Fig. 4: Halteprofile in Form von Hakenelementen gemäß dem Stand der Technik,
- Fig. 5-8: eine Ausführungsform einer Hakenverbindung mit einem Sperrelement mit einer federnden Rastlasche, die während der Montage der Hakenverbindung selbsttätig in eine zugeordnete Rastvertiefung eingreift
- Fig. 9: ein weiteres Sperrelement mit einer federnden Rastlasche sowie eine Sperrnut, die zur Aufnahme des Sperrelements angepasst ist,
- Fig. 10: eine Hakenverbindung mit dem Sperrelement gemäß Fig. 9, während des Fügevorgangs,
- Fig. 11: eine Hakenverbindung mit dem Sperrelement gemäß Fig. 9 im eingerasteten Zustand,
- Fig. 12: eine Hakenverbindung mit denselben Sperrnuten und derselben Sperrausnehmung, wie gemäß Fig. 11, wobei das Rastlaschen-Sperrelement ersetzt ist durch ein Sperrelement mit rundem Querschnitt.

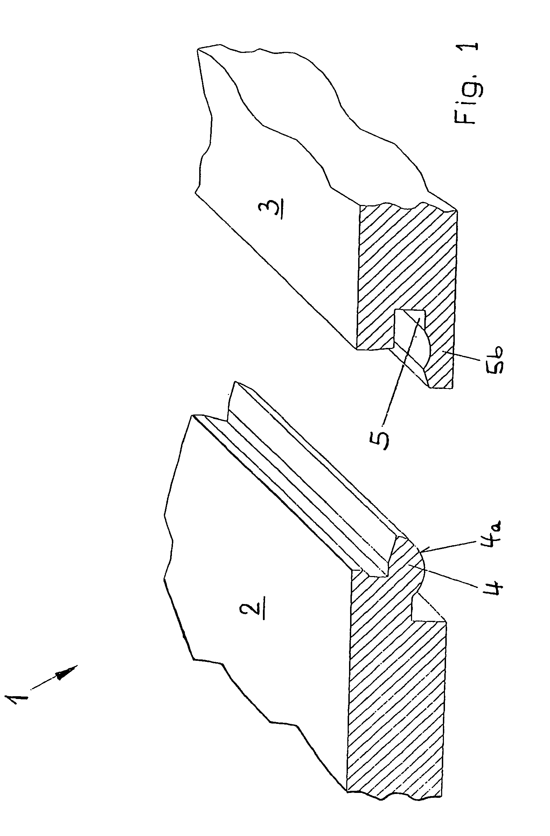

Nach Figur 1 der Zeichnung ist eine Art der Halteprofile des erfindungsgemäßen Befestigungssystems 1 perspektivisch dargestellt. An der jeweils gegenüberliegenden Schmalseite von Paneelen 2 und 3 sind korrespondierende Halteprofile vorgesehen, so dass sich die benachbarten Paneele 2 und 3 miteinander verbinden lassen. Bei dieser Art der Halteprofile handelt es sich um eine modifizierte Nut- und Federverbindung, bei der die Feder 4 eine Hinterschneidung in der unteren Nutwand der Nut 5 hintergreift, so dass beide Paneele 2 und 3 im verlegten Zustand gegen ein Auseinanderziehen in der Ebene der verlegten Paneele 2 und 3 und senkrecht zur Richtung der verriegelten Schmalseiten gesichert sind.

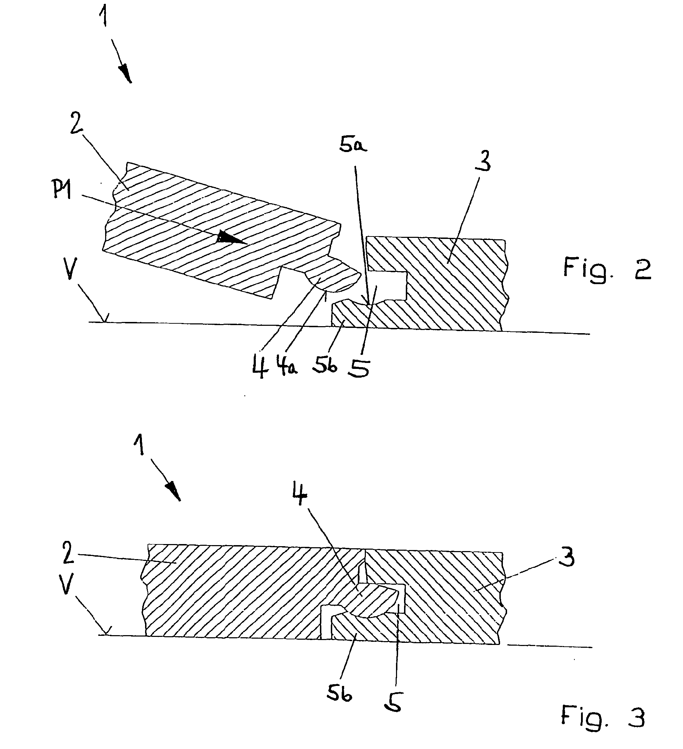

Figur 2 zeigt das schräge Ansetzen eines neuen Paneels 2. Dabei wird stets die Feder 4 des neuen Paneels 2 in Pfeilrichtung P1 mit der Nut 5 des verlegten Paneels 3 in Eingriff gebracht und das neue Paneel 2 anschließend auf den Verlegeuntergrund V herabgeschwenkt, bis die in Figur 3 dargestellte Lage erreicht ist. Es ist leicht verständlich, dass ein gekrümmter Bereich 4a des Querschnitts der Feder 4 eine im Querschnitt gekrümmte Vertiefung 5a in der unteren Nutwand 5b der Nut 5 derart hintergreift, dass ein ebenes Auseinanderschieben der Paneele 2 und 3 senkrecht zu den verriegelten Schmalseiten verhindert ist.

An den übrigen Schmalseiten eines Paneels 2 bzw. 3, das mit dem erfindungsgemäßen Befestigungssystem 1 ausgestattet ist, sind korrespondierende Halteprofile mit Hakenelementen 6 und 7 vorgesehen. Diese haben den Vorteil, dass sie sich sozusagen gleichzeitig mit der Verriegelung der gemäß Figuren 1-3 beschriebenen Halteprofile, Feder 4 und Nut 5, nach dem schrägen Ansetzen durch ein Herabschwenken des neuen Paneels 2 auf den Verlegeuntergrund V miteinander verhaken. Eine irgendwie geartete seitliche Fügebewegung ist zur Herstellung der sich ergebenden Hakenverbindung 8 nicht erforderlich.

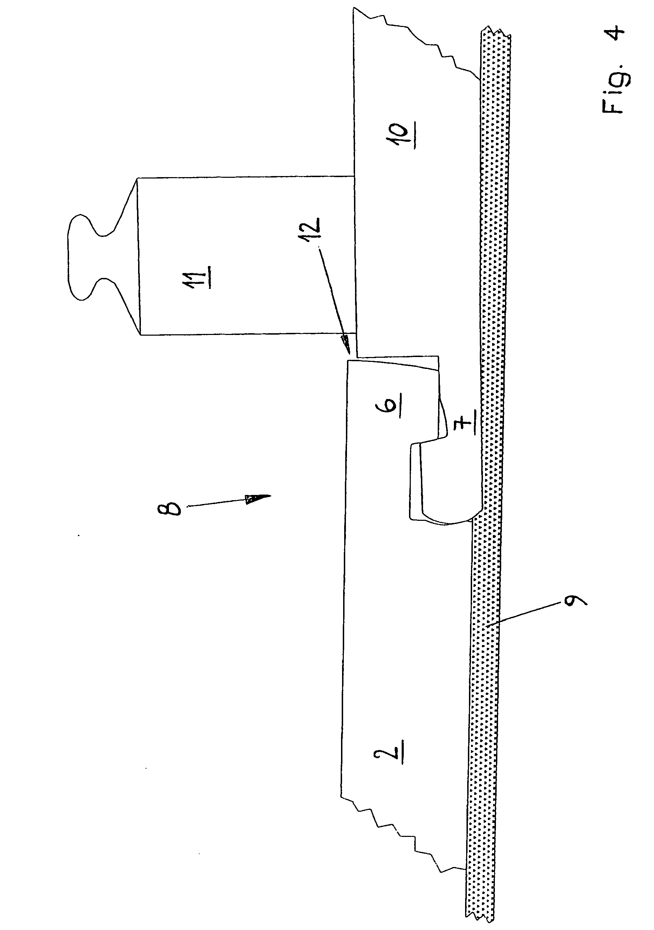

Die gemäß Figur 4 dargestellte Hakenverbindung 8 gemäß dem Stand der Technik gerät außer Eingriff. Dies beispielsweise auf unebenen Untergründen, mit Luft zwischen den Paneelen und dem Verlegeuntergrund V sowie dann, wenn eine weiche trittschalldämmende Zwischenlage 9 zwischen den Paneelen und Verlegeuntergrund V angeordnet ist. In Figur 4 verdeutlicht das symbolisch dargestellte Gewicht 11, wie ein Paneel, dessen Hakenelement dem Verlegeuntergrund zugewandt ist, unter der Last eines Gewichts 11 in eine weiche trittschalldämmende Zwischenlage 9 einsinkt. Hierbei kommt es zu einem Höhenversatz 12 an der Oberfläche der Paneele 2 und 10.

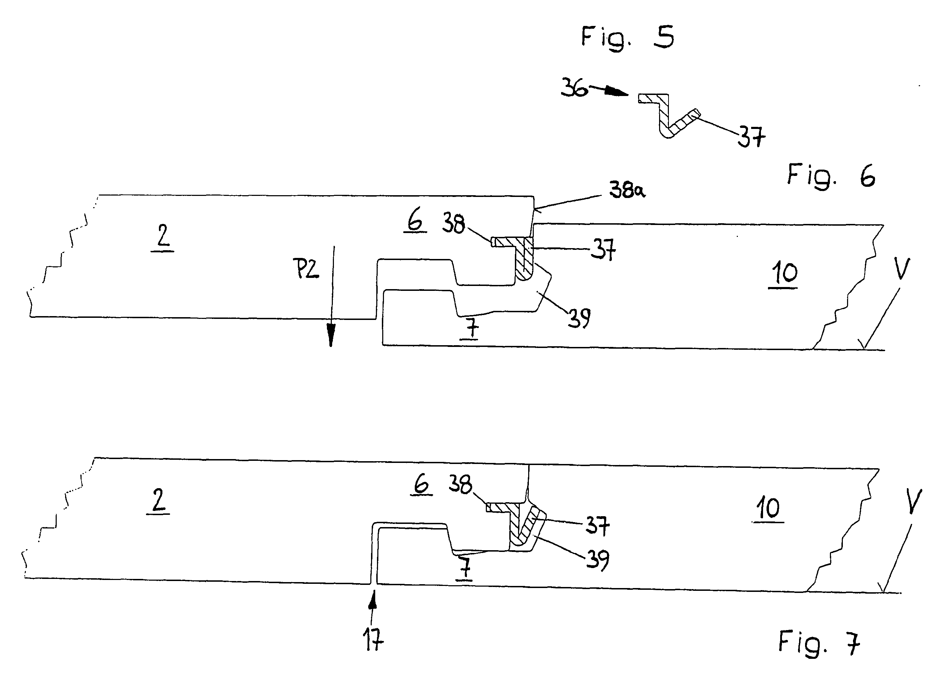

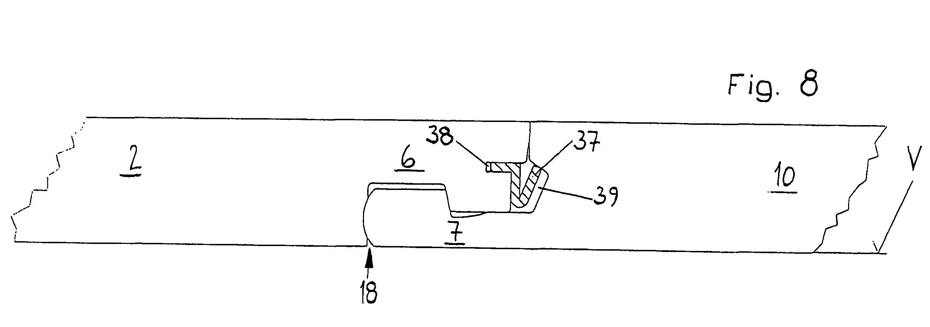

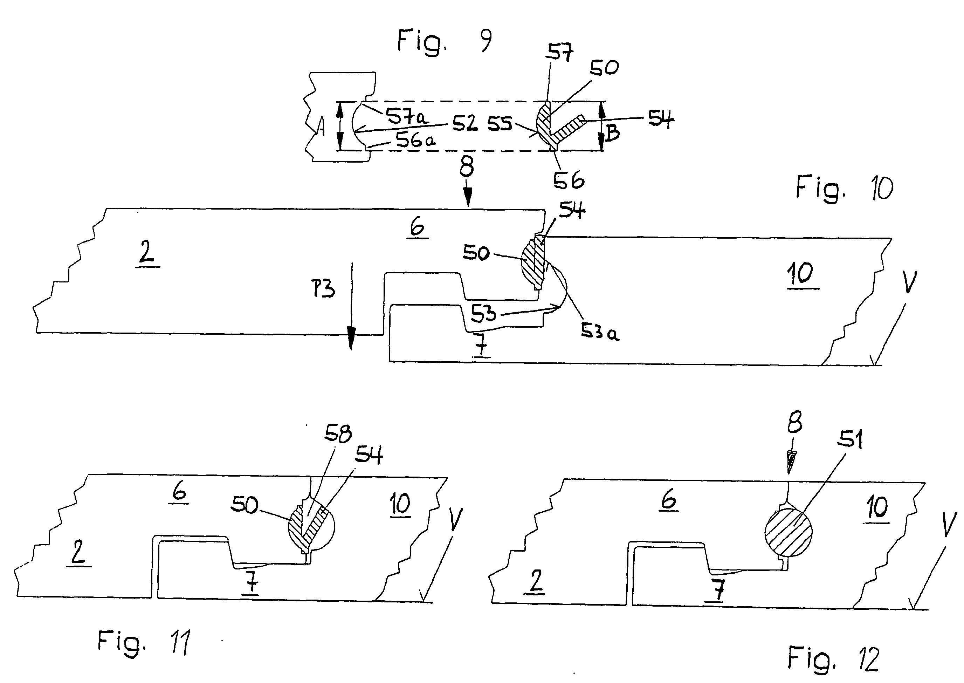

Eine Ausführungsform einer Hakenverbindung 8 ist anhand der Figuren 5 - 8 erläutert. Figur 5 zeigt ein loses Sperrelement 36 mit einer federnden Rastlasche 37, die im dargestellten entspannten Zustand weit abgespreizt ist. Figur 6 zeigt das allmähliche Ineinanderfügen der Hakenverbindung 8 gemäß Pfeilrichtung P2. Dabei ist das Sperrelement 36 gemäß Figur 5 in einer Nut 38 in der frei hervorstehenden Fläche 38a des oberen Hakenelements 6 eingesetzt. Die federnde Rastlasche 37 ist durch die Fügebewegung selbst zurückgeklappt. Sobald die Hakenverbindung 8 die in Figur 7 dargestellte Verriegelungslage nahezu erreicht, federt die Rastlasche 37 des Sperrelements 36 selbsttätig in eine Rastvertiefung 39 des korrespondierenden Hakenelements 7. In der gezeigten Stellung ist die Rastlasche 37 weniger weit abgespreizt als in ihrer nach Fig. 5 gezeigten entspannten Lage, so dass sie permanent einen Federdruck gegen die Rastvertiefung 39 ausübt und die Hakenverbindung 8 sicher arretiert.

Das Sperrelement 36 kann durch einen Verlegehandwerker als loses Element in der dafür vorgesehenen Nut 38 des oberen Hakenelements 6 eingesetzt werden oder herstellerseitig an dem Hakenelement 6 vormontiert sein. Das Sperrelement 36 kann sich über die gesamte Länge der Schmalseite eines Paneels erstrecken oder nur über einen Teil der Länge der Schmalseite. In dem Ausführungsbeispiel erstreckt es sich von einem Ende der Schmalseite über deren halbe Länge.

In Figur 7 ist dargestellt, dass zu beiden Seiten der Rastlasche 37 Freiräume vorhanden sind. Diese können beispielsweise dazu dienen, zwecks Demontage der Paneele 2 und 10 das Sperrelement 36 mit Hilfe einer Spitzzange aus der Hakenverbindung 8 herauszuziehen und diese dadurch zu entriegeln.

Die Figuren 6 und 7 zeigen wiederum eine Konstruktion, bei der das dem Verlegeuntergrund V zugewandte Hakenelement 7 an seinem äußeren Ende einen freien Zwischenraum 17 zu dem korrespondierenden Hakenelement 6 aufweist.

Eine weitere Ausführungsform der Hakenverbindung mit einem Sperrelement, 36 das eine selbsttätige Rastlasche 37 aufweist, ist in Figur 8 dargestellt. Der einzige Unterschied zu der Ausführungsform nach Fig. 6 und Fig. 7 besteht darin, dass das dem Verlegeuntergrund V zugewandte Hakenelement 7 des Paneels 10 an seinem freien äußeren Ende keinen Freiraum 17 zu dem korrespondierenden Hakenelement 6 des verbundenen Paneels 2 aufweist. Stattdessen ist wiederum eine hinterschnittene Verbindung 18 vorgesehen, die ebenso wie das Sperrelement 36 ein Auseinanderbewegen der Hakenverbindung 8 in einer Richtung senkrecht zu der Ebene der verlegten Paneele 2 und 10 verhindert.

Fig. 9 zeigt ein Sperrelement 50 mit besonderem Querschnitt, das in der Praxis durch das in Fig. 12 gezeigte Sperrelement 51 ersetzt werden kann. Letzteres Sperrelement 51 weist einen einfachen runden Querschnitt auf. Außerdem zeigt Fig. 9 eine leere Sperrnut 52, in der das Sperrelement 51 verliersicher aufnehmbar ist. Die Verliersicherheit gewährleistet während der Handhabung eines Paneels 2 und während der Verhakung der Hakenverbindung 8 gemäß Pfeilrichtung P3, dass das Sperrelement 50 nicht aus der Sperrnut 52 herausfällt. Damit ein Austausch der Sperrelemente 50 und 51 möglich ist, sind die in den Hakenelementen 6 und 7 vorgesehenen Sperrnuten 52 und 53 in besonderer Weise an die Geometrie der unterschiedlichen Sperrelemente 50 und 51 angepaßt.

Das Sperrelement 50 ist eine Weiterbildung des in Fig. 5 dargestellten Sperrelements 36. Es weist eine Rastlasche 54 auf, die in Fig. 9 in einem weit abgespreizten entspannten Zustand dargestellt ist. An einem Rücken 55 weist das Sperrelement 50 eine runde Form auf, die sich gemäß Fig. 10 passend in die Sperrnut 52 des Hakenelements 6 einfügt. Das Sperrelement 50 ist mit Halteelementen 56 und 57 versehen, über die es in der Sperrnut 52 des Hakenelements 6 verliersicher festlegbar ist. Die Halteelemente 56 und 57 dienen außerdem dazu ein Verrutschen bzw. eine Verdrehung des Sperrelements 50 in der Sperrnut 52 bzw. in der durch die Sperrnuten 52 und 53 gebildeten Sperrausnehmung 58 zu verhindern. Die Halteelemente 56 und 57 sind in der vorliegenden Ausführungsform als stumpfe Nocken ausgebildet. An der leeren Sperrnut 52 der Fig. 9 ist zu sehen, dass diese an den Rändern ihres halbkreisförmigen Querschnitts Materialausnehmungen 56a und 57a aufweist, die zur Aufnahme der Halteelemente 56 und 57 dienen. Das an der Sperrnut 52 angegebene Maß A ist etwas geringer ausgeführt als das an dem Sperrelement 50 angegebene Maß B. Dies bewirkt die verliersichere Klemmung des Sperrelements 50 in der Sperrnut 52. In einer anderen Ausführungsform sind die Halteelemente des Sperrelements 50 als Widerhaken oder Krallelemente ausgebildet (nicht dargestellt), die in einem Teil der Nutwand der Sperrnut 52 festsetzbar sind, und das Sperrelement 50 verliersicher an dem Hakenelement 6 festhalten. Die Materialausnehmungen in der Sperrnut 52 sind bei dieser Ausführung nicht erforderlich.

Fig. 10 zeigt den Fügevorgang einer Hakenverbindung 8. Ein Paneel 2 wird nämlich gemäß Pfeilrichtung P3 auf den Verlegeuntergrund V herabgeschwenkt, wodurch die Hakenelemente 6 und 7 der Paneele 2 und 10 sich miteinander verhaken. Es ist leicht erkennbar, dass das Sperrelement 50 sicher in der Sperrnut 52 gehalten ist, während die Hakenelemente auf die beschriebene Weise verbunden werden. Sobald das freie Ende der Rastlasche 54 eine obere Kante 53a der Sperrnut 53 passiert hat, federt die Rastlasche 54 selbsttätig in die Sperrnut 53, welche ihr als Rastvertiefung dient und verriegelt die Hakenverbindung, wie in Fig. 11 dargestellt.

### Bezugszeichenliste

- 1: Befestigungssystem
- 2: Paneel
- 3: Paneel
- 4: Feder
- 4a: gekrümmter Bereich
- 5: Nut
- 5a: gekrümmte Vertiefung
- 5b: untere Nutwand
- 6: Hakenelement
- 7: Hakenelement
- 8: Hakenverbindung
- 9: Trittschall dämmende Zwischenlage
- 10: Paneel
- 11: Gewicht
- 12: Höhenversatz
- 36: Sperrelement
- 37: Rastlasche
- 38: Nut
- 38a: hervorstehende Fläche
- 39: Rastvertiefung
- 50: Sperrelement
- 51: Sperrelement
- 52: Sperrnut
- 53: Sperrnut
- 53a: obere Kante
- 54: Rastlasche
- 55: Rücken
- 56: Halteelement
- 56a: Materialausnehmung
- 57: Halteelement
- 57a: Materialausnehmung
- 58: Sperrausnehmung
- A: Maß
- B: Maß
- P1: Pfeilrichtung
- P2: Pfeilrichtung
- P3: Pfeilrichtung
- V: Verlegeuntergrund

## Patentansprüche

1. Befestigungssystem (1) für viereckige tafelförmige Paneele (2, 3, 10) mit an den Schmalseiten der Paneele (2, 3, 10) angeordneten Halteprofilen, von denen gegenüberliegend angeordnete Halteprofile derart zueinander passen, dass gleichartige Paneele (2, 3, 10) miteinander verbindbar sind, wobei die Halteprofile an gegenüberliegenden Schmalseiten als erste Halteprofile und an den übrigen Schmalseiten als zweite Halteprofile ausgebildet sind, so dass an einem in erster Reihe liegenden Paneel (2, 3, 10) in zweiter Reihe ein neues Paneel (2) verriegelbar ist, indem das neue Paneel (2) zunächst in Schrägstellung relativ zu dem liegenden Paneel (3) an das liegende Paneel (3) angefügt und nachfolgend in die Ebene des liegenden Paneels (3) herabgeschwenkt wird, wobei die gegenüberliegend angeordneten zweiten Halteprofile korrespondierende Hakenelemente (6, 7) aufweisen, und wobei mit einem der Hakenelemente (6, 7) des neuen Paneels (2) und einem Hakenelement (6, 7) eines bereits in zweiter Reihe liegenden Paneels (3) durch das Herabschwenken des neuen Paneels (2) eine Hakenverbindung (8) herstellbar ist, wobei jeder Hakenverbindung (8) ein zusätzliches loses Sperrelement (36, 50) zugeordnet ist, das im verhakten Zustand zweier Paneele (2, 3, 10) ein Lösen der Hakenverbindung (8) in einer Richtung senkrecht zu der Ebene der verlegten Paneele (2, 3, 10) unterbindet, mit der Maßgabe, dass das Sperrelement (36, 50) in einer Sperrnut (52) eines der Hakenelemente (6) eines ersten Paneels (2) angeordnet ist und die Sperrnut (52) an einer Fläche des Hakenelements (6) vorgesehen ist, die im verlegten Zustand der Paneele (2, 3, 10) etwa senkrecht zu der Ebene ausgerichtet ist, in der die Paneele (2, 3, 10) verlegt sind, insbesondere für Fußbodenpaneele, **dadurch gekennzeichnet, dass** zumindest ein solches Sperrelement (36, 50) vorgesehen ist, das eine federnde Rastlasche (37, 54) aufweist, wobei die Sperrnut (53) des zugeordneten Hakenelements (7) der gegenüberliegenden Schmalseite eines zweiten Paneels (10) eine hinterschnittene Rastvertiefung (39) bildet, in die die Rastlasche (37, 54) des Hakenelements (6) des ersten Paneels (2) während der Montage selbsttätig einrastbar ist.

2. Befestigungssystem nach Anspruch 1, **dadurch gekennzeichnet, dass** die Sperrnuten (52, 53) an solchen Flächen eines Hakenelements (6, 7) vorgesehen sind, die im verlegten Zustand der Paneele (2, 3, 10) etwa senkrecht zu der Ebene ausgerichtet sind, in der die Paneele (2, 3, 10) verlegt sind.

3. Befestigungssystem nach Anspruch 1 oder 2, **dadurch gekennzeichnet, dass** die Sperrnuten (52, 53) der Hakenverbindung (8), welche die gemeinsame Sperrausnehmung bilden, derart ausgebildet sind, dass entweder ein weiteres, dafür vorgesehenes stabförmiges Sperrelement (51) in seiner Längsrichtung in die Sperrausnehmung einschiebbar ist oder alternativ das Sperrelement (50) in derselben Sperrausnehmung aufnehmbar ist, das eine federnde Rastlasche (54) aufweist, wobei dann eine der Sperrnuten (52, 53) eine Halteaufnahme für das mit der Rastlasche (54) versehene Sperrelement (50) bildet und die zugeordnete Sperrnut (53) eine hinterschnittene Rastvertiefung bildet, in die die federnde Rastlasche (54) während der Montage der Hakenverbindung (8) selbsttätig einrastbar ist.

4. Paneel mit einem Befestigungssystem (1) nach einem der Ansprüche 1 bis 3.

## Claims

1. Fastening system (1) for rectangular, tabular panels (2, 3, 10), with retaining profiles located on the small faces of said panels (2, 3, 10), of which opposite retaining profiles match each other in such a manner that similar panels (2, 3, 10) can be interconnected, where the retaining profiles on opposite small faces are designed as first retaining profile, and on the other small faces as second retaining profiles, such that, on a panel (2, 3, 10) lying in the first row, a new panel (2) can be locked in a second row by first attaching the new panel (2) to the installed panel (3) at a temporary angle relative to the installed panel (3) and then swivelling it down into the plane of the installed panel (3), where the opposite, second retaining profiles display corresponding hook elements (6, 7), and where a hook connection (8) can be established by means of one of the hook elements (6, 7) of the new panel (2) and a hook element (6, 7) of a panel (3) already installed in the second row by swivelling down the new panel (2), where each hook connection (8) is assigned an additional, loose locking element (36, 50) which, in hooked state of two panels (2, 3, 10), prevents the hook connection (8) from being released in a direction perpendicular to the plane of the installed panels (2, 3, 10), subject to the proviso that the locking element (36, 50) is located in a locking groove (52) of one of the hook elements (6) of a first panel (2) and the locking groove (52) is provided on a surface of the hook element (6) that, in installed state of the panels (2, 3, 10), is aligned roughly perpendicular to the plane in which the panels (2, 3, 10) are installed, especially for floor panels, **characterised in that** at least one such locking element (36, 50) is provided that displays a resilient snap tab (37, 54), where the locking groove (53) of the associated hook element (7) of the opposite small face of a second panel (10) forms an undercut snap-in depression (39), into which the snap tab (37, 54) of the hook element (6) of the first panel (2) snaps automatically during installation.

2. Fastening system according to Claim 1, **characterised in that** the locking grooves (52, 53) are provided on surfaces of a hook element (6, 7) that, in installed state of the panels (2, 3, 10) are oriented roughly perpendicular to the plane in which the panels (2, 3, 10) are installed.

3. Fastening system according to Claim 1 or 2, **characterised in that** the locking grooves (52, 53) of the hook connection (8), which form the common locking recess, are designed in such a way that either a further, rod-shaped locking element (51) provided for this purpose can be slid in its longitudinal direction into the locking recess or, alternatively, the locking element (50) having a resilient snap tab (54) can be accommodated in the same locking recess, where one of the locking grooves (52, 53) then forms a retaining mount for the locking element (50) provided with the snap tab (54), and the associated locking groove (53) forms an undercut snap-in depression, into which the resilient snap tab (54) snaps automatically during assembly of the hook connection (8).

4. Panel with a fastening system (1) according to one of Claims 1 to 3.

## Revendications

1. Système de fixation (1) pour des panneaux quadrangulaires en forme de plaque (2, 3, 10) comportant des profils de retenue disposés au niveau des côtés étroits des panneaux (2, 3, 10) et correspondant à des profils de retenue situés de manière opposée, de manière telle que des panneaux identiques (2, 3, 10) peuvent être reliés ensemble, sachant que les profils de retenue sont conçus au niveau des côtés étroits opposés en tant que premiers profils de retenue et au niveau des autres côtés étroits en tant que deuxièmes profils de retenue, de sorte qu'un nouveau panneau (2) peut être verrouillé, dans une deuxième rangée, au niveau d'un panneau (2, 3, 10) situé dans une première rangée, dans lequel le nouveau panneau (2) est, en premier lieu, joint au panneau horizontal (3) dans une position inclinée par rapport audit panneau (3) et est ensuite abaissé dans le plan du panneau horizontal (3), sachant que les deuxièmes profils de retenue disposés à l'opposé présentent des éléments crochets (6, 7) correspondants et sachant qu'il est possible de créer une liaison par crochets (8) avec un des éléments crochets (6, 7) du nouveau panneau (2) et un élément crochet (6, 7) d'un panneau (3) déjà posé en deuxième rangée, par abaissement du nouveau panneau (2), sachant que chaque liaison par crochets (8) est associée à un élément de blocage (36, 50) mobile supplémentaire qui, lorsque deux panneaux (2, 3, 10) sont crochetés, empêche une libération de la liaison par crochets (8) dans un sens perpendiculaire au plan des panneaux posés (2, 3, 10), sous réserve que l'élément de blocage (36, 50) est disposé dans une rainure de blocage (52) d'un des éléments crochets (6) d'un premier panneau (2) et que la rainure de blocage (52) est prévue au niveau d'une face de l'élément crochet (6) qui, les panneaux (2, 3, 10) posés, est alignée à peu près perpendiculairement au plan dans lequel les panneaux (2, 3, 10) sont posés, en particulier pour des panneaux pour le sol, **caractérisé en ce qu'**il est au moins prévu un tel élément de blocage (36, 50) présentant une patte d'enclenchement élastique (37, 54), sachant que la rainure de blocage (53) de l'élément crochet (7) associé du côté étroit opposé d'un deuxième panneau (10) forme un enfoncement d'enclenchement à contre-dépouille (39), dans lequel la patte d'enclenchement (37, 54) de l'élément crochet (6) du premier panneau (2) peut être automatiquement encliquetée pendant le montage.

2. Système de fixation selon la revendication 1, **caractérisé en ce que** les rainures de blocage (52, 53) sont prévues au niveau de telles faces d'un élément crochet (6, 7) qui, les panneaux (2, 3, 10) posés, sont alignées à peu près perpendiculairement au plan dans lequel les panneaux (2, 3, 10) sont posés.

3. Système de fixation selon la revendication 1 ou 2, **caractérisé en ce que** les rainures de blocage (52, 53), formant tout l'évidement de blocage, de la liaison par crochets (8), sont conçues de telle sorte que, soit un autre élément de blocage (51) en forme de barre et prévu à cet effet peut être inséré dans le sens de sa longueur dans l'évidement de blocage, soit, en variante, l'élément de blocage (50), présentant une patte d'enclenchement élastique (54), peut être logé dans le même évidement de blocage, sachant que l'une des rainures de blocage (52, 53) forme un logement de retenue pour l'élément de blocage (50) muni de la patte d'enclenchement élastique (54), et que la rainure de blocage (53) associée forme un enfoncement d'enclenchement à contre-dépouille dans lequel la patte d'enclenchement élastique (54), peut être automatiquement encliquetée pendant le montage de la liaison par crochets (8).

4. Panneau avec un système de fixation (1) selon l'une quelconque des revendications 1 à 3.
